# EUROPÄISCHE PATENTSCHRIFT

(11) **EP 3 617 035 B1**
(45) Veröffentlichungstag und Bekanntmachung des Hinweises auf die Patenterteilung: **11.08.2021**
(21) Anmeldenummer: 19182112.3
(22) Anmeldetag: 24.06.2019
(51) Int. Cl.: B62D 1/181

(54) **VERSTELLBARE STEER-BY-WIRE LENKSÄULE FÜR EIN KRAFTFAHRZEUG**
ADJUSTABLE STEER-BY-WIRE STEERING COLUMN FOR A MOTOR VEHICLE
COLONNE DE DIRECTION PAR CÂBLES RÉGLABLE POUR UN VÉHICULE AUTOMOBILE

(30) Priorität: 28.08.2018 DE 102018214546
(43) Veröffentlichungstag der Anmeldung: 04.03.2020
(73) Patentinhaber: VOLKSWAGEN AKTIENGESELLSCHAFT, 38440 Wolfsburg (DE)
(72) Erfinder: Marx, Peter, 38553 Wasbüttel (DE); Przybylski, Mirko, 38100 Braunschweig (DE); Knopp, Thomas, 38159 Vechelde (DE); Kreis, Christopher, 38126 Braunschweig (DE); Wilske, Ernst, 39291 Nedlitz (DE)

(56) Entgegenhaltungen:
- DE-A1-102015 224 602
- FR-A1- 3 059 969

## Beschreibung

Die vorliegende Erfindung betrifft eine verstellbare Steer-by-Wire Lenksäule für ein Kraftfahrzeug. Ferner betrifft die Erfindung ein Kraftfahrzeug mit einer gattungsgemäßen Lenksäule.

Im Gegensatz zu Kraftfahrzeugen mit Lenksystemen, bei welchen eine über ein Lenkrad in eine Lenksäule eingebrachte Lenkkraft über elektromechanische Mittel an eine Lenkachse weitergeleitet werden und eine direkte mechanische Kopplung zwischen dem Lenkrad und der Lenkachse besteht, hat es sich bei Kraftfahrzeugen mit einem autonomen Fahrmodus bewährt, das Lenkrad mechanisch von der Lenkachse zu entkoppeln.

Lenksäulen mit einer mechanischen Entkopplung von Lenkrad und Lenkachse werden auch als "Steer-by-Wire Lenksäule" bezeichnet, da eine Übertragung eines Einschlagwinkels des Lenkrads an die Lenkachse ausschließlich elektronisch erfolgt. Gattungsgemäße Lenksäulen weisen daher zur Erfassung des Lenkradeinschlagwinkels eine spezielle Sensorik auf.

Aus Gründen der Fahrsicherheit sowie des Fahrkomforts weisen Lenksäulen zumindest eine axiale sowie eine rotatorische Verstellmöglichkeit auf. Auf diese Weise ist eine Lage des Lenkrads relativ zum Fahrer einstellbar und ist somit für verschiedene Fahrer des Kraftfahrzeugs individuell anpassbar. Bei einem autonomen Fahrbetrieb ist ein Eingreifen seitens des Fahrers nicht erforderlich, sodass das Lenkrad lediglich einen Freiraum des Fahrers begrenzt. Daher ist es vorteilhaft, die Lenksäule derart zu gestalten, dass das Lenkrad vollständig oder nahezu vollständig im Cockpit des Kraftfahrzeugs versenkbar ist. Zur Steigerung des Komforts weisen moderne Steer-by-Wire Lenksäulen zudem eine automatische Verstellbarkeit auf.

Aus der US 5,193,848 A ist ein Lenksäulenmodul mit teleskopierbaren Rohren bekannt, bei der ein Innenrohr über eine Zahnstange und ein Schneckenrad elektrisch verschiebbar gebildet ist.

Die US 5,105,677 A betrifft ein verschieb- und verschwenkbares Lenksäulenmodul mit einem über einen Getriebemotor gebildeten elektrischen Antrieb.

Aus der US 5,105,677 A ist eine Lenksäule für eine Steer-by-Wire Lenkeinrichtung bekannt. Die Längsverstellung erfolgt hierbei über ein teleskopierbares Außenrohr und einen innenliegenden Spindelantrieb, wobei die Spindel zweiteilig und teleskopierbar ausgeführt ist.

Die US 7,461,863 B2 betrifft eine axial verschiebbare Lenksäule für ein Kraftfahrzeug, die bei Auslösung eines Airbags pyrotechnisch unter Einsatz eines Zahnstangengetriebes vom Fahrer weggezogen wird.

Weiterhin offenbart die DE 10 2015 224 602 A1 den Oberbegriff des unabhängigen Anspruchs, nämlich einen zweistufigen Verstellantrieb für eine Steer-by-Wire Lenksäule auf der Basis von Spindeltrieben.

Aus der FR 3 059 969 ist eine Lenksäule bekannt, die manuell über ein Zahnstangengetriebe für den autonomen Betriebs des Fahrzeugs axial aus dem Bereich für manuelles Fahrens bewegt werden kann.

Aus dem Stand der Technik ist somit zwar eine Verstellmöglichkeit einer Lenksäule für ein Kraftfahrzeug in axialer Richtung bekannt, jedoch sind die Verstellbereiche, insbesondere aufgrund der verwendeten Antriebe beschränkt. Mit der für einen autonomen Fahrbereich beschriebenen Möglichkeit einer Versenkung des Lenkrads im Armaturenbrett geht jedoch ein Wunsch nach einem deutlich größeren Verstellbereich als bei klassischen Lenksäulen einher, sodass häufig Verstellwege von bis zu 300 mm gewünscht werden. Mit den bisher bekannten Antriebsmitteln, wie Hebelwippen oder manuellen Rastschienen kann eine solche Gesamtlänge des Verstellweges unter gleichzeitiger Sicherstellung der nötigen Stabilität nicht gewährleistet werden.

Es ist daher die Aufgabe der vorliegenden Erfindung, die voranstehend beschriebenen Nachteile einer verstellbaren Steer-by-Wire Lenksäule zumindest teilweise zu beheben, insbesondere ist es die Aufgabe der vorliegenden Erfindung, eine stabile verstellbare Steer-by-Wire Lenksäule zur Verfügung zu stellen, die auf einfache und kostengünstige Art und Weise herstellbar ist und insbesondere einen großen Verstellweg garantiert.

Die voranstehende Aufgabe wird gelöst durch eine Vorrichtung mit den Merkmalen des Anspruchs 1 sowie ein Kraftfahrzeug, umfassend eine Vorrichtung mit den Merkmalen des Anspruchs 1. Weitere Merkmale und Details ergeben sich aus den Unteransprüchen, der Beschreibung und den Zeichnungen. Technische Merkmale, die zu der erfindungsgemäßen Vorrichtung offenbart werden gelten dabei auch in Verbindung mit dem erfindungsgemäßen Kraftfahrzeug und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Die gegenständliche verstellbare Steer-by-Wire Lenksäule kann vorzugsweise in Personenkraftwagen oder Lastkraftwagen eingesetzt werden. Ebenso ist jedoch auch ein Einsatz in Nutzfahrzeugen, wie Gabelstaplern oder in Flugobjekten oder Schiffen denkbar.

Die gegenständliche verstellbare Steer-by-Wire Lenksäule für ein Kraftfahrzeug umfasst hierbei eine teleskopierbare Lenkrohranordnung mit einer Lenkradanbindungsstelle zum Anbinden eines Lenkrads, ein erstes inneres Profil und ein zweites äußeres Profil. Ferner umfasst die gegenständliche Lenksäule einen zweistufigen Antrieb mit einem Antriebsmotor und zumindest einem ersten und einem zweiten Antriebsmittel zum Verschieben des ersten Profils relativ zum zweiten Profil sowie das erfindungsgemäße Merkmal, dass die Antriebsmittel in Form von Schubstangen gebildet sind.

Die erfindungsgemäß vorgesehenen Schubstangen sind hierbei zur Ausführung bzw. Übertragung einer Zugkraft vorgesehen und vorzugsweise in Form von Zahnstangenelementen gebildet. Das gegenständliche erste innere und zweite äußere Profil ist hierbei zumindest teilweise in Form von beweglichen bzw. bewegbaren Profilen gebildet, wobei insbesondere das innere Profil bewegbar ist. Das äußere Profil ist dagegen vorzugsweise fest an dem Rahmen bzw. einem Rahmenelement des Kraftfahrzeugs befestigt und insbesondere als Verstärkungselement bzw. als stabilisierendes Element ausgebildet. Im Rahmen einer einfachen und komfortablen Verstellung einer Position der erfindungsgemäßen verstellbaren Steer-by-Wire Lenksäule kann diese vorzugsweise in Form einer elektrisch verstellbaren Lenksäule gebildet sein. Hierbei kann die Lenksäule vorteilhafterweise über einen in Form eines Elektromotors gebildeten Antriebsmotor in ihrer Position verstellbar, insbesondere stufenlos verstellbar sein. Unter einem erfindungsgemäßen zweistufigen Antrieb kann im Rahmen der Erfindung insbesondere die Generierung zweier voneinander separierbarer Bewegungen durch die Einwirkung einer Kraft mittels eines einzigen Antriebs verstanden werden. Die separierbaren Bewegungen können sich hierbei beispielsweise im Hinblick auf die zurückgelegte Strecke, die Geschwindigkeit und/oder die Beschleunigung der Bewegung unterscheiden, können dagegen aber vorzugsweise dieselbe Richtung aufweisen und insbesondere gleichzeitig ausgeführt werden. Es versteht sich, dass im Rahmen der Erfindung alternativ zu einem zweistufigen Antrieb auch ein mehrstufiger Antrieb, wie ein drei- vier- oder fünfstufiger Antrieb vorgesehen sein kann.

Die gegenständliche Lenkradanbindungsschnittstelle ist zum Anbinden eines Lenkrads an die Lenksäule ausgebildet. Hierfür weist die Lenkradanbindungsschnittstelle beispielsweise eine Montageplatte, einen Montagerahmen oder dergleichen auf, an welcher das Lenkrad anordenbar ist. Ferner weist die Lenkradanbindungsschnittstelle vorzugsweise Durchführungen zum Durchführen von Befestigungsmitteln, insbesondere Schrauben, Bolzen oder dergleichen, auf. Es ist bevorzugt, dass die Lenkradanbindungsschnittstelle einen Formschlussabschnitt, wie beispielsweise einen Absatz, zum relativen Ausrichten des Lenkrads und/oder ein sonstiges Befestigungsmittel, wie beispielsweise eine Gewindestange, zum lösbaren Befestigen des Lenkrads an der Lenkradanbindungsschnittstelle aufweist. Die Lenkradanbindungsschnittstelle ist vorzugsweise an einem ersten Ende der Lenkrohranordnung angeordnet.

Mittels der erfindungsgemäßen verstellbaren Steer-by-Wire Lenksäule für ein Kraftfahrzeug ist es insbesondere möglich, selbst große Verstellwege von bis zu 300 mm, wie sie insbesondere für Anwendungen des autonomen Fahrens vorteilhaft sind, im Rahmen einer gleichzeitig stabilen Ausführung zu gewährleisten. Hierbei erlaubt vor allem die erfindungsgemäße Trennung von Führung und Antrieb, bzw. von Führungselementen und Antriebselementen eine gleichzeitig stabile und weit verstellbare bzw. verfahrbare Lösung. Die erfindungsgemäße Ausbildung beider Antriebsmittel in Form von Schubstangen ermöglicht hierbei zudem eine besonders zugfeste und stabile Lagerung.

Im Hinblick auf einen stabilen und möglichst symmetrisch ausgerichteten Antrieb zum Verschieben des ersten Profils relativ zum zweiten Profil kann erfindungsgemäß insbesondere vorgesehen sein, dass zumindest vier Antriebsmittel zum Verschieben des ersten Profils relativ zum zweiten Profil vorgesehen sind, wobei vorzugsweise zwei Paare von jeweils zwei nebeneinander angeordneten Antriebsmitteln vorgesehen sind. Die Antriebsmittel können hierbei vorzugsweise gegenüberliegend voneinander in einem Randbereich der Lenkrohranordnung, insbesondere spiegelsymmetrisch zueinander angeordnet sein. Alternativ können auch drei Antriebsmittel vorgesehen sein, wobei dann vorzugsweise ein erstes Antriebsmittel zentral entlang der Längsachse der Lenkrohranordnung angeordnet sein kann und zwei zweite Antriebsmittel vorteilhafterweise spiegelsymmetrisch zueinander jeweils in einem Randbereich der Lenkrohranordnung angeordnet sein können.

Im Rahmen einer stabilen Ausführung und der gleichzeitigen Gewährleistung eines möglichst langen Verschiebeweges der gegenständlichen Lenksäule kann im Rahmen der Erfindung ferner vorgesehen sein, dass ein zwischen dem ersten und dem zweiten Profil angeordnetes Zwischenprofil vorgesehen ist. Vorzugsweise ist das Zwischenprofil zur Gewährleistung zusätzlicher Stabilität der Lenksäule derart am inneren Profil angeordnet, dass es dieses abstützt. Zur Gewährleistung eines möglichst langen Verschiebeweges ist das Zwischenprofil vorteilhafterweise ebenfalls bewegbar ausgeführt und kann beispielsweise mit Hilfe eines Antriebsmittels in Form eines Zahnstangenantriebs angetrieben werden. Hierbei ist das Zwischenprofil vorteilhafterweise mit dem ersten inneren Profil verbunden, sodass das innere Profil zusätzlich zu einem eigenen Antrieb über das Zwischenprofil angetrieben werden kann. Es versteht sich, dass die Antriebselemente und Übersetzungen dafür entsprechend angepasst werden müssen.

Im Hinblick auf eine besonders kompakte und einfach herstellbare Ausführung der erfindungsgemäßen Lenksäule ist es ferner denkbar, dass ein Schienensystem zum Verschieben des ersten Profils und/oder des Zwischenprofils relativ zum zweiten Profil vorgesehen ist, wobei das Schienensystem vorzugsweise eine erste Schiene eine Zwischenschiene und/oder eine zweite Schiene aufweist. Hierbei ist das zweite Profil vorzugsweise auf der zweiten Schiene angeordnet, die vorzugsweise fest mit dem Rahmen bzw. einem Rahmenelement eines Kraftfahrzeugs verbunden ist, wohingegen das erste Profil vorteilhafterweise auf einer verschiebbaren ersten Schiene angeordnet ist, die über das Zwischenprofil, das beispielsweise auf einer ebenfalls verschiebbaren Zwischenschiene angeordnet ist, mit der zweiten Schiene verbunden ist. Alternativ zu der Ausführung einer Anordnung der Profile auf einem Schienensystem versteht es sich, dass die Profile, insbesondere das Zwischenprofil, selbst in Form von Schienen bzw. einem Schienensystem gebildet sein können.

Im Rahmen einer Ausführung des Zwischenprofils in Form einer Zwischenschiene, kann auf dieser vorteilhafterweise ein Antriebsmittel, vorzugsweise ein in Form einer Zahnstange gebildetes Antriebsmittel befestigt oder integriert sein. So kann der erfindungsgemäße zweistufige Antrieb vorteilhafterweise eine erste Stufe aufweisen, bei dem ein Zwischenprofil stabil gegenüber dem Rahmen bzw. einem Rahmenelement geführt wird, wobei das Zwischenprofil vorzugsweise in Form einer Zwischenschiene ausgebildet ist und an der Oberseite ein Antriebsmittel in Form einer Zahnstange umfasst, die über den Antriebsmotor angetrieben wird. Eine zweite Stufe kann dann vorzugsweise das erste Profil über ein ebenfalls mit Hilfe des Antriebsmotors angetriebenen Zahnstangenantrieb auf einer ersten Schiene bewegen, die sich gleichsinnig mit der Zwischenschiene bewegt, sodass ein Verschiebeweg von bis zu 300 mm erreicht werden kann.

Um sowohl eine hohe Stabilität als auch einen langen Verschiebeweg zu ermöglichen, kann erfindungsgemäß ferner vorgesehen sein, dass die Antriebsmittel sich hinsichtlich der Länge ihres Verschiebeweges unterscheiden, wobei das zum Antrieb des inneren Profils vorgesehene Antriebsmittel vorzugsweise einen längeren Verschiebeweg aufweist, als das zum Antrieb des Zwischenprofils vorgesehene Antriebsmittel. Vorzugsweise ist das zum Antrieb des inneren Profils vorgesehene erste Antriebsmittel auch in einem inneren Bereich der Lenkrohranordnung angeordnet bzw. zumindest relativ zum zweiten Antriebsmittel in einem inneren Bereich der Lenkrohranordnung positioniert. Im Rahmen einer besonders komfortablen und zugleich ästhetisch ansprechenden Lenksäule kann erfindungsgemäß ferner vorgesehen sein, dass die Antriebsmittel derart ausgebildet und zueinander angeordnet sind, dass das erste Profil relativ zum zweiten Profil um zumindest 200 mm, vorzugsweise um zumindest 250 mm, insbesondere um zumindest 300 mm verschiebbar ist. Auf diese Weise ist es möglich, ein Lenkrad vollständig oder nahezu vollständig im Cockpitraum eines Kraftfahrzeugs zu versenken.

Im Rahmen einer kompakten und konstruktiv einfach herstellbaren Variante der gegenständlichen Lenksäule kann erfindungsgemäß ferner vorgesehen sein, dass der zweistufige Antrieb in Form eines Zahnradantriebes gebildet ist und zumindest ein erstes Zahnritzel zum Eingriff in das erste Antriebsmittel und ein zweites Zahnritzel zum Eingriff in das zweite Antriebsmittel umfasst, wobei die Ritzel vorzugsweise auf einer zentral angeordneten Antriebswelle angeordnet sind und sich in ihrer Größe und/oder Anzahl von Zähnen und/oder in dem Teilkreisdurchmesser der Zähne unterscheiden. Im Hinblick auf einen stabilen und möglichst symmetrisch ausgerichteten Antrieb zum Verschieben des ersten Profils relativ zum zweiten Profil kann erfindungsgemäß insbesondere im Rahmen einer Anordnung mit vier Antriebsmitteln vorgesehen sein, dass zumindest vier auf einer Welle angeordnete Zahnritzel zum Eingriff in das erste und zweite Antriebsmittel vorgesehen sind, wobei vorzugsweise zwei Paare von jeweils zwei nebeneinander angeordneten Zahnritzeln vorgesehen sind. Die Zahnritzelpaare können hierbei vorzugsweise gegenüberliegend voneinander in einem Randbereich der Lenkrohranordnung, insbesondere spiegelsymmetrisch zueinander angeordnet sein, wobei vorzugsweise jeweils zwei unterschiedlich große Zahnritzel bzw. jeweils zwei Zahnritzel unterschiedlicher Anzahl von Zähnen und/oder mit Zähnen eines unterschiedlichen Teilkreisdurchmessers nebeneinander angeordnet sein können. Alternativ zu der Anordnung von vier Zahnritzeln auf einer Welle können insbesondere im Rahmen einer Anordnung mit drei Antriebsmitteln auch nur drei Zahnritzel vorgesehen sein, von denen dann vorteilhafterweise ein größeres Zahnritzel mit größerer Übersetzung zentral zwischen zwei vorteilhafterweise gleich großen kleineren Zahnritzeln angeordnet - und zum Antrieb des ersten Profils vorgesehen sein können.

Als Voraussetzung für eine konstruktiv einfache Lösung eines gleichzeitigen und gleichsinnigen Antriebs des ersten Profils bzw. des Zwischenprofils gegenüber dem zweiten Profil kann insbesondere vorgesehen sein, dass das erste und zweite Antriebsmittel auf unterschiedlichen Ebenen angeordnet sind.

Um eine einfache und verschleißarme Bewegung bzw. Verschiebung der Profile zueinander bzw. gegeneinander zu gewährleisten kann es ferner von Vorteil sein, wenn reibungs- und spielminimierende Wälz- und Gleitelemente zur Führung vorgesehen sind. Diese können beispielsweise in Form von Lagern, Kugeln oder Rollen oder dergleichen gebildet sein.

Hinsichtlich einer vorteilhaften Kraftübertragung ist es ebenfalls denkbar, dass der Antriebsmotor im Wesentlichen rechtwinklig zu den Antriebsmitteln und/oder dem ersten und zweiten Profil sowie dem Zwischenprofil angeordnet ist. Vorzugsweise ist der Motor hierbei in der Nähe, vorteilhafterweise auf der Antriebswelle angeordnet und dabei in Form eines Elektromotors, insbesondere in Form eines Hohlwellenmotors gebildet.

Um dem Fahrer eines Kraftfahrzeugs mit einer erfindungsgemäßen Lenksäule ein möglichst realistisches Fahrgefühl zu vermitteln, kann zudem vorgesehen sein, dass ein Force-Feedback Aktuator zum Simulieren einer Übertragung mechanischer Kräfte und/oder mechanischer Impulse von einer Fahrbahn über das Kraftfahrzeug zur Lenkradanbindungsstelle vorgesehen ist. Ebenso kann eine Lenkstellung der Räder auf das Lenkrad übertragen werden. Der gegenständliche Force-Feedback Aktuator kann hierbei insbesondere im Lenkrohr der Lenksäule angeordnet sein und einen Generator zum Simulieren der mechanischen Impulse, Kräfte, Momente oder dergleichen aufweisen, der beispielsweise in Form eines Elektromotors oder dergleichen gebildet sein kann.

Ebenfalls Gegenstand der Erfindung ist zudem ein Kraftfahrzeug, umfassend eine voranstehend beschriebene Lenksäule. Die Lenksäule kann hierbei insbesondere über eine Cockpitanbindungsstelle oder dergleichen an einen Cockpitträger eines Kraftfahrzeugs angebunden sein und mittels entsprechender Befestigungsmittel an diesen fixiert sein. Ein Lenkrad des Kraftfahrzeugs kann ferner ebenfalls an der Lenkradanbindungsstelle der Lenksäule angeordnet und vorzugsweise lösbar an dieser befestigt sein. Bezüglich des beschriebenen Kraftfahrzeugs ergeben sich somit sämtliche Vorteile, die bereits zur erfindungsgemäßen Lenksäule beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine perspektivische Ansicht einer schematischen Darstellung einer erfindungsgemäßen verstellbaren Steer-by-Wire Lenksäule für ein Kraftfahrzeug gemäß einem ersten Ausführungsbeispiel,
- Fig. 2: eine perspektivische Ansicht einer schematischen Darstellung einer erfindungsgemäßen verstellbaren Steer-by-Wire Lenksäule für ein Kraftfahrzeug gemäß einem zweiten Ausführungsbeispiel,
- Fig. 3: eine Draufsicht auf eine Schnittdarstellung einer erfindungsgemäßen Lenksäule gemäß einem Längsschnitt,
- Fig. 4: eine Seitenansicht auf eine Schnitterstellung einer erfindungsgemäßen Lenksäule gemäß einem Längsschnitt.

In den Figuren werden für die gleichen technischen Merkmale identische Bezugszeichen verwendet.

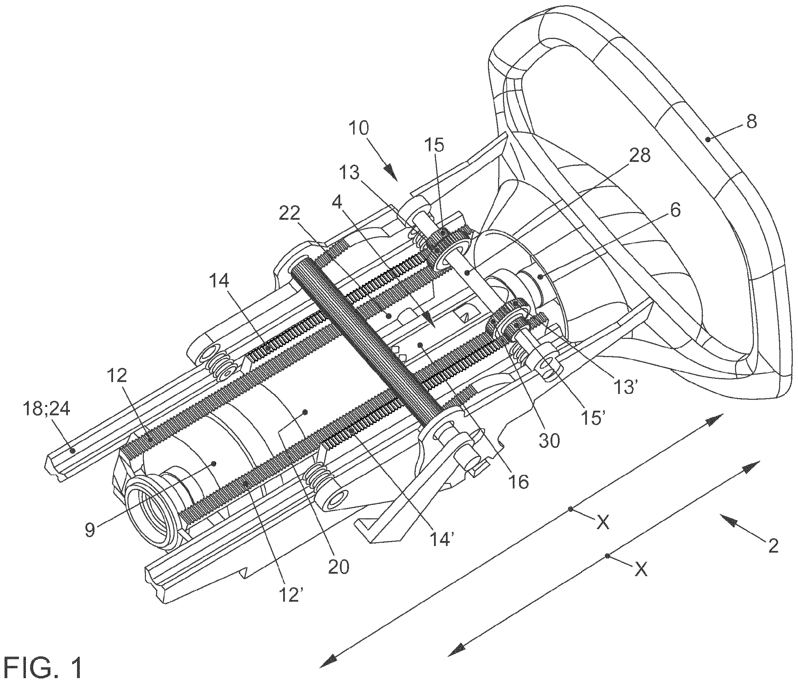

Fig. 1 zeigt eine perspektivische Ansicht einer schematischen Darstellung einer erfindungsgemäßen verstellbaren Steer-by-Wire Lenksäule 2 für ein Kraftfahrzeug gemäß einem ersten Ausführungsbeispiel.

Die gegenständliche Lenksäule 2 umfasst hierbei eine teleskopierbare Lenkrohranordnung 4 mit einer Lenkradanbindungsstelle 6 zum Anbinden eines Lenkrads 8, ein erstes inneres Profil 16 und ein zweites äußeres Profil 20 sowie einen zweistufigen Antrieb 10 mit einem hier nicht dargestellten Antriebsmotor und zumindest einem ersten und einem zweiten Antriebsmittel 12, 14 zum Verschieben des ersten Profils 16 relativ zum zweiten Profil 20.

Neben einem ersten und zweiten Antriebsmittel 12, 14 sind noch ein weiteres erstes und zweites Antriebsmittel 12', 14', also insgesamt vier Antriebsmittel 12, 12', 14, 14' zum Verschieben des ersten Profils 16 relativ zum zweiten Profil 20 vorgesehen, wobei vorzugsweise zwei Paare von jeweils zwei nebeneinander angeordneten Antriebsmitteln 12, 14; 12', 14' vorgesehen sind. Die Antriebsmittel 12, 14; 12', 14' sind vorliegend gegenüberliegend voneinander in einem Randbereich der Lenkrohranordnung, insbesondere spiegelsymmetrisch zueinander angeordnet. Der zweistufige Antrieb 10 ist hierbei in Form eines Zahnradantriebes gebildet und weist zumindest zwei erste Zahnritzel 13, 13' zum Eingriff in die ersten Antriebsmittel 12, 12' sowie zwei zweite Zahnritzel 15, 15' zum Eingriff in die zweiten Antriebsmittel 14, 14' auf, wobei die Ritzel 13, 13', 15, 15' vorliegend allesamt auf einer zentral angeordneten Antriebswelle 28 befestigt sind und sich teilweise 13 und 13' von 15 und 15' in ihrer Größe und/oder Anzahl von Zähnen 30 bzw. dem Teilkreisdurchmesser der Zähne unterscheiden.

Der Zahnradantrieb 10 gemäß Fig. 1 wird dabei vorzugsweise über einen hier nicht dargestellten Antriebsmotor, der beispielsweise in Form eines Elektromotors gebildet sein kann, angetrieben. Die ersten Antriebsmittel 12, 12' werden hierbei über die größeren Ritzel 13, 13' angetrieben, wohingegen die zweiten Antriebsmittel 14, 14' durch die kleineren Ritzel 15, 15' angetrieben werden.

Neben dem ersten und zweiten Profil 16, 20 weist die gegenständliche verstellbare Lenksäule 2 noch ein Zwischenprofil 18 auf, das vorliegend in Form einer verschiebbaren Zwischenschiene 24 gebildet und zwischen dem ersten und zweiten Profil 16, 20 angeordnet ist. Das Zwischenprofil 18 bzw. die Zwischenschiene 24 ist über die zweiten Antriebsmittel 14, 14' entlang eines Verschiebeweges X verstellbar gebildet, wohingegen das innere Profil 16 über die ersten Antriebsmittel 12, 12' auf einer ersten Schiene 22 entlang eines Verschiebeweges X verstellbar gebildet ist. Die Antriebsmittel 12 und 14 bzw. 12' und 14' unterscheiden sich hierbei hinsichtlich der Länge ihres Verschiebeweges X, wobei die zum Antrieb des inneren Profils 16 vorgesehenen Antriebsmittel 12, 12' vorliegend einen längeren Verschiebeweg X aufweisen, als das zum Antrieb des Zwischenprofils 18 vorgesehene Antriebsmittel 14, 14'.

Um dem Fahrer eines Kraftfahrzeugs mit einer erfindungsgemäßen Lenksäule 2 ein möglichst realistisches Fahrgefühl zu vermitteln weist die erfindungsgemäße Lenksäule 2 ferner einen Force-Feedback Aktuator 9 zum Simulieren einer Übertragung mechanischer Kräfte und/oder mechanischer Impulse von einer Fahrbahn über das Kraftfahrzeug zur Lenkradanbindungsstelle 6 auf.

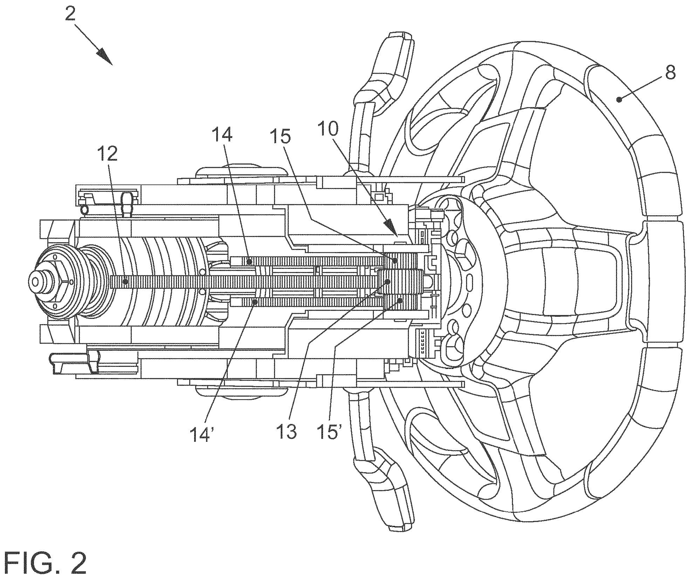

Fig. 2 zeigt eine perspektivische Ansicht einer schematischen Darstellung einer erfindungsgemäßen verstellbaren Steer-by-Wire Lenksäule für ein Kraftfahrzeug gemäß einem zweiten Ausführungsbeispiel.

Gemäß dem zweiten Ausführungsbeispiel weist die gegenständliche verstellbare Steer-by-Wire Lenksäule nur ein erstes Antriebsmittel 12 und zwei zweite Antriebsmittel 14, 14' auf. Das erste Antriebsmittel 12 ist hierbei zentral entlang der Längsachse der Lenkrohranordnung 4 angeordnet und wird über das ebenfalls zentral angeordnete größere erste Zahnritzel 13 der Antriebseinheit 10 angetrieben. Die beiden zweiten Antriebsmittel 14, 14' sind vorliegend spiegelsymmetrisch zueinander jeweils in einem Randbereich der Lenkrohranordnung 4 angeordnet und werden jeweils von den kleineren zweiten Zahnritzeln 15, 15' angetrieben.

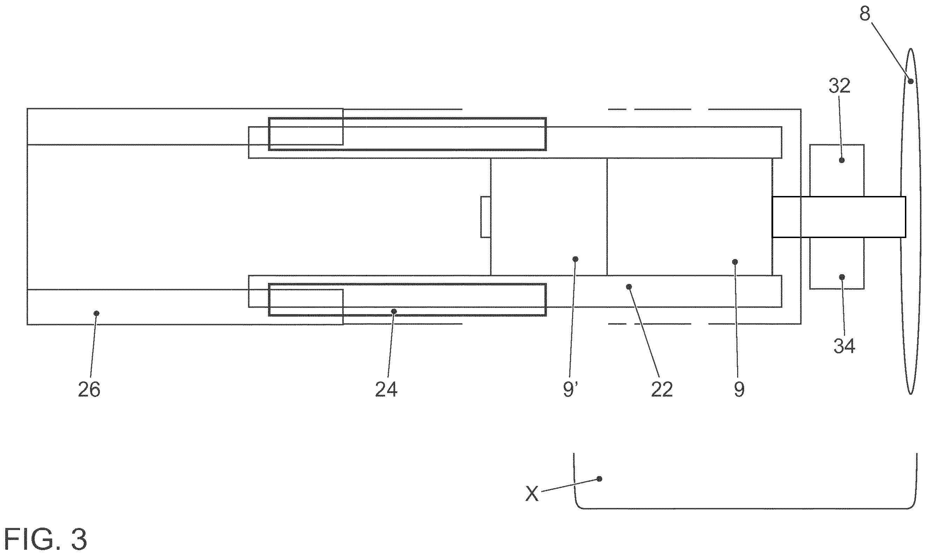

Fig. 3 zeigt eine Draufsicht auf eine Schnittdarstellung einer erfindungsgemäßen Lenksäule 2 gemäß einem Längsschnitt. Gemäß dieser Draufsicht erkennt man das mehrgliedrige System von in einander einfahrbaren Profilschienen (22, 24, 26), umfassend eine fest mit dem Rahmen bzw. einem Rahmenelement des Kraftfahrzeugs verbundene zweite Profilschiene 26, eine über einen weiten Verschiebebereich X verschiebbare erste Profilschiene 22 sowie eine zwischen der ersten und der zweiten Profilschiene (22, 26) angeordnete Zwischenschiene 24. Das an der ersten Schiene 22 befestigte erste Profil 16 überwindet hierbei insgesamt den größten Verschiebeweg X, wobei das Zwischenprofil 18, bzw. die Zwischenschiene 24 die erste Schiene 22 bei einer Verschiebung mitnimmt. Gleichzeitig wird die erste Schiene 22 zusätzlich angetrieben. Die Antriebselemente 12,14 und Übersetzungen müssen daher entsprechend darauf angepasst werden.

Innerhalb des Schienensystems sind - wie zu erkennen - ferner ein Force-Feedback-Aktuator 9 sowie ein entsprechender Antrieb 9' für den Aktuator angeordnet. Zwischen dem Lenkrad 8 und dem Schienensystem befindet sich ferner die Lenkwelle 32 sowie der Lenkstockschalter 34. Die Lenksäule 2 befindet sich gemäß dem vorliegend dargestellten Ausführungsbeispiel in einer maximal ausgefahrenen Position und kann über den Verschiebeweg X in Richtung der zweiten fest mit dem Rahmen verbundenen Profilschiene 26 eingeschoben werden.

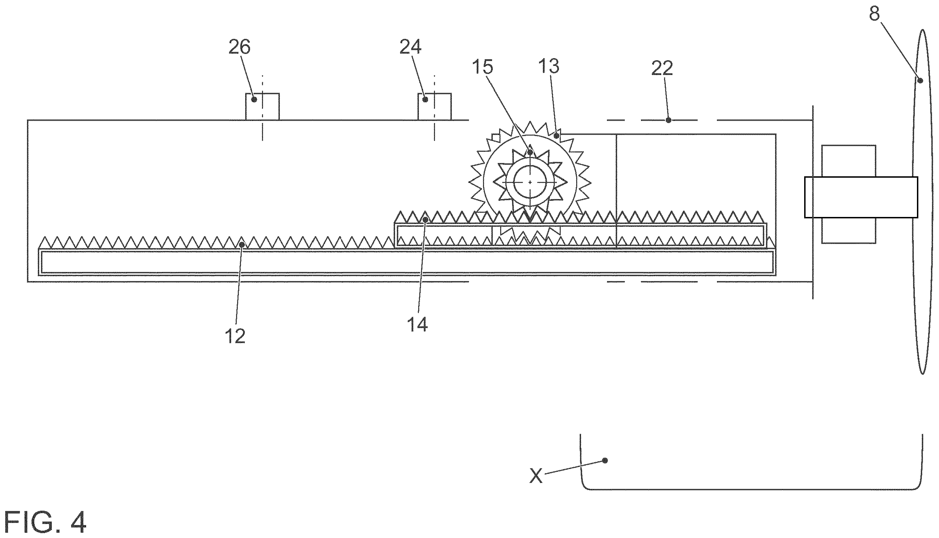

Fig. 4 zeigt eine Seitenansicht auf eine Schnittdarstellung einer erfindungsgemäßen Lenksäule 2. Die Seitenansicht zeigt hierbei den stufenangepassten Antrieb für das mehrgliedrige System von ineinander verfahrbaren Profilschienen, umfassend eine mit dem Rahmen verbundene zweite Profilschiene 26, eine über das erste Antriebsmittel 12 angetriebene erste Profilschiene 22 sowie eine zwischen der ersten Schiene 22 und der zweiten Schiene 26 angeordnete Zwischenschiene 24.

Ferner ist der erfindungsgemäß vorgeschlagene Zahnradantrieb, umfassend ein erstes und zweites Zahnritzel, 13, 15 zum Eingriff in das erste und zweite Antriebsmittel 12, 14 dargestellt.

Mittels der gegenständlichen Längssäule 2 ist es insbesondere möglich, einen insbesondere im Rahmen eines autonomen Fahrens vorteilhaften langen Verstellbereich von bis zu 300 mm in Kombination mit einer entsprechend stabilen Ausführung einer gegenständlichen Lenksäule zu schaffen. Hierbei erlaubt insbesondere die erfindungsgemäße Ausbildung der Antriebsmittel in Form von Schubstangen eine besonders zugfeste und zugleich stabile Lagerung.

### Bezugszeichenliste

- 2: Lenksäule
- 4: Lenkrohranordnung
- 6: Lenkradanbindungsschnittstelle
- 8: Lenkrad
- 9: Force-Feedback Aktuator
- 9': Antrieb für Force-Feedback Aktuator
- 10: zweistufiger Antrieb erstes Antriebsmittel
- 12:
- 12': erstes Antriebsmittel
- 13: erstes Zahnritzel
- 13': erstes Zahnritzel
- 14: zweites Antriebsmittel
- 14': zweites Antriebsmittel
- 15: zweites Zahnritzel
- 15': zweites Zahnritzel
- 16: erstes Profil
- 18: Zwischenprofil
- 20: zweites Profil
- 22: erste Schiene
- 24: Zwischenschiene
- 26: zweite Schiene
- 28: Antriebswelle
- 30: Zähne
- 32: Lenkwelle
- 34: Lenkstockschalter
- X: Verschiebeweg

## Patentansprüche

1. Verstellbare Steer-by-Wire Lenksäule (2) für ein Kraftfahrzeug, umfassend
- eine teleskopierbare Lenkrohranordnung (4) mit einer Lenkradanbindungsstelle (6) zum Anbinden eines Lenkrads (8),
- ein erstes inneres Profil (16) und ein zweites äußeres Profil (20),
- einen zweistufigen Antrieb (10) mit einem Antriebsmotor und zumindest einem ersten und einem zweiten Antriebsmittel (12, 14) zum Verschieben des ersten Profils (16) relativ zum zweiten Profil (20),
**dadurch gekennzeichnet,**
**dass** die Antriebsmittel (12, 14) in Form von Schubstangen gebildet sind.

2. Lenksäule (2) nach Anspruch 1,
**dadurch gekennzeichnet,**
**dass** die Antriebsmittel (12, 14) in Form von Zahnstangenelementen gebildet sind.

3. Lenksäule (2) nach Anspruch 1,
**dadurch gekennzeichnet,**
**dass** zumindest vier Antriebsmittel (12, 12', 14, 14') zum Verschieben des ersten Profils (16) relativ zum zweiten Profil (20) vorgesehen sind, wobei vorzugsweise zwei Paare von jeweils zwei nebeneinander angeordneten Antriebsmitteln (12, 14; 12', 14') vorgesehen sind.

4. Lenksäule (2) nach einem der vorangehenden Ansprüche,
**dadurch gekennzeichnet,**
**dass** ein zwischen dem ersten und dem zweiten Profil (16, 20) angeordnetes Zwischenprofil (18) vorgesehen ist.

5. Lenksäule (2) nach einem der vorangehenden Ansprüche,
**dadurch gekennzeichnet,**
**dass** die Antriebsmittel (12, 14) sich hinsichtlich der Länge ihres Verschiebeweges (X) unterscheiden, wobei das zum Antrieb des inneren Profils (16) vorgesehene Antriebsmittel (12, 14) vorzugsweise einen längeren Verschiebeweg (X) aufweist, als das zum Antrieb des Zwischenprofils (18) vorgesehene Antriebsmittel (12, 14).

6. Lenksäule (2) nach einem der vorangehenden Ansprüche,
**dadurch gekennzeichnet,**
**dass** ein Schienensystem zum Verschieben des ersten Profils (16) und/oder des Zwischenprofils (18) relativ zum zweiten Profil (20) vorgesehen ist, wobei das Schienensystem vorzugsweise eine erste Schiene (22) sowie eine Zwischenschiene (24) aufweist.

7. Lenksäule (2) nach einem der vorangehenden Ansprüche,
**dadurch gekennzeichnet,**
**dass** der zweistufige Antrieb (10) in Form eines Zahnradantriebes gebildet ist und zumindest ein erstes Zahnritzel (13) zum Eingriff in das erste Antriebsmittel (12) und ein zweites Zahnritzel (15) zum Eingriff in das zweite Antriebsmittel (14) umfasst, wobei die Ritzel (13, 15) vorzugsweise auf einer zentral angeordneten Antriebswelle (28) angeordnet sind und sich in ihrer Größe und/oder Anzahl von Zähnen (30) unterscheiden.

8. Lenksäule (2) nach einem der vorangehenden Ansprüche,
**dadurch gekennzeichnet,**
**dass** das erste und zweite Antriebsmittel (12, 14) auf unterschiedlichen Ebenen angeordnet sind.

9. Lenksäule (2) nach einem der vorangehenden Ansprüche,
**dadurch gekennzeichnet,**
**dass** zumindest vier auf einer Welle (28) angeordnete Zahnritzel (13, 13', 15, 15') zum Eingriff in das erste und zweite Antriebsmittel (12, 12', 14, 14') vorgesehen sind, wobei vorzugsweise zwei Paare von jeweils zwei nebeneinander angeordneten Zahnritzeln (13, 15; 13', 15') vorgesehen sind.

10. Lenksäule (2) nach einem der vorangehenden Ansprüche,
**dadurch gekennzeichnet,**
**dass** der Antriebsmotor im Wesentlichen rechtwinklig zu den Antriebsmitteln (12, 14) und/oder dem ersten und zweiten Profil (16, 20) sowie dem Zwischenprofil (18) angeordnet ist.

11. Kraftfahrzeug, umfassend eine Lenksäule (2) nach einem der Ansprüche 1 bis 10.

## Claims

1. Adjustable steer-by-wire steering column (2) for a motor vehicle, comprising
- a telescopic steering tube arrangement (4) with a steering wheel attachment point (6) for the attachment of a steering wheel (8),
- a first inner profile (16) and a second outer profile (20),
- a two-stage drive (10) with a drive motor and at least one first and one second drive means (12, 14) for the displacement of the first profile (16) relative to the second profile (20),
**characterized**
**in that** the drive means (12, 14) are formed in the form of push rods.

2. Steering column (2) according to Claim 1,
**characterized**
**in that** the drive means (12, 14) are formed in the form of rack elements.

3. Steering column (2) according to Claim 1,
**characterized**
**in that** at least four drive means (12, 12', 14, 14') for the displacement of the first profile (16) relative to the second profile (20) are provided, two pairs of in each case two drive means (12, 14; 12', 14') which are arranged next to one another preferably being provided.

4. Steering column (2) according to one of the preceding claims,
**characterized**
**in that** an intermediate profile (18) which is arranged between the first and the second profile (16, 20) is provided.

5. Steering column (2) according to one of the preceding claims,
**characterized**
**in that** the drive means (12, 14) differ with regard to the length of their displacement travel (X), the drive means (12, 14) which is provided for driving the inner profile (16) preferably having a longer displacement travel (X) than the drive means (12, 14) which is provided for driving the intermediate profile (18).

6. Steering column (2) according to one of the preceding claims,
**characterized**
**in that** a rail system for the displacement of the first profile (16) and/or the intermediate profile (18) relative to the second profile (20) is provided, the rail system preferably having a first rail (22) and an intermediate rail (24).

7. Steering column (2) according to one of the preceding claims,
**characterized**
**in that** the two-stage drive (10) is formed in the form of a gearwheel drive and comprises at least one first toothed pinion (13) for engaging into the first drive means (12) and one second toothed pinion (15) for engaging into the second drive means (14), the pinions (13, 15) preferably being arranged on a centrally arranged drive shaft (28) and differing in terms of their size and/or number of teeth (30).

8. Steering column (2) according to one of the preceding claims,
**characterized**
**in that** the first and second drive means (12, 14) are arranged on different planes.

9. Steering column (2) according to one of the preceding claims,
**characterized**
**in that** at least four toothed pinions (13, 13', 15, 15') which are arranged on a shaft (28) for engaging into the first and second drive means (12, 12', 14, 14') are provided, two pairs of in each case two toothed pinions (13, 15; 13', 15') which are arranged next to one another preferably being provided.

10. Steering column (2) according to one of the preceding claims,
**characterized**
**in that** the drive motor is arranged substantially at a right angle with respect to the drive means (12, 14) and/or the first and second profile (16, 20) and the intermediate profile (18).

11. Motor vehicle, comprising a steering column (2) according to one of Claims 1 to 10.

## Revendications

1. Colonne de direction à commande électrique « Steer-by-Wire » réglable (2) pour un véhicule automobile, comportant :
- un agencement de tubes de direction télescopique (4) muni d'un emplacement de liaison de volant de direction (6) pour la liaison d'un volant de direction (8),
- un premier profilé intérieur (16) et un deuxième profilé extérieur (20),
- un entraînement à deux étages (10) muni d'un moteur d'entraînement et d'au moins un premier et un deuxième moyen d'entraînement (12, 14) pour le déplacement du premier profilé (16) par rapport au deuxième profilé (20),
**caractérisée en ce que**
les moyens d'entraînement (12, 14) sont formés sous la forme de bielles de poussée.

2. Colonne de direction (2) selon la revendication 1,
**caractérisée en ce que**
les moyens d'entraînement (12, 14) sont formés sous la forme d'éléments de crémaillère.

3. Colonne de direction (2) selon la revendication 1,
**caractérisée en ce que**
au moins quatre moyens d'entraînement (12, 12', 14, 14') sont prévus pour le déplacement du premier profilé (16) par rapport au deuxième profilé (20), deux paires de respectivement deux moyens d'entraînement (12, 14 ; 12', 14') agencés l'un à côté de l'autre étant de préférence prévues.

4. Colonne de direction (2) selon l'une quelconque des revendications précédentes,
**caractérisée en ce que**
un profilé intermédiaire (18) agencé entre le premier et le deuxième profilé (16, 20) est prévu.

5. Colonne de direction (2) selon l'une quelconque des revendications précédentes,
**caractérisée en ce que**
les moyens d'entraînement (12, 14) diffèrent au regard de la longueur de leur trajet de déplacement (X), le moyen d'entraînement (12, 14) prévu pour l'entraînement du profilé intérieur (16) présentant de préférence un trajet de déplacement (X) plus long que le moyen d'entraînement (12, 14) prévu pour l'entraînement du profilé intermédiaire (18).

6. Colonne de direction (2) selon l'une quelconque des revendications précédentes,
**caractérisée en ce que**
un système de rails est prévu pour le déplacement du premier profilé (16) et/ou du profilé intermédiaire (18) par rapport au deuxième profilé (20), le système de rails comprenant de préférence un premier rail (22) et un rail intermédiaire (24).

7. Colonne de direction (2) selon l'une quelconque des revendications précédentes,
**caractérisée en ce que**
l'entraînement à deux étages (10) est formé sous la forme d'un entraînement à roue dentée, et comporte au moins un premier pignon (13) pour l'engrènement dans le premier moyen d'entraînement (12) et un deuxième pignon (15) pour l'engrènement dans le deuxième moyen d'entraînement (14), les pignons (13, 15) étant de préférence agencés sur un arbre d'entraînement (28) agencé de façon centrale, et différant au niveau de leur taille et/ou de leur nombre de dents (30).

8. Colonne de direction (2) selon l'une quelconque des revendications précédentes,
**caractérisée en ce que**
le premier et le deuxième moyen d'entraînement (12, 14) sont agencés sur différents plans.

9. Colonne de direction (2) selon l'une quelconque des revendications précédentes,
**caractérisée en ce que**
au moins quatre pignons (13, 13', 15, 15') agencés sur un arbre (28) sont prévus pour l'engrènement dans le premier et le deuxième moyen d'entraînement (12, 12', 14, 14'), deux paires de respectivement deux pignons (13, 15 ; 13', 15') agencés l'un à côté de l'autre étant de préférence prévues.

10. Colonne de direction (2) selon l'une quelconque des revendications précédentes,
**caractérisée en ce que**
le moteur d'entraînement est agencé essentiellement à angle droit des moyens d'entraînement (12, 14) et/ou du premier et du deuxième profilé (16, 20), ainsi que du profilé intermédiaire (18).

11. Véhicule automobile, comportant une colonne de direction (2) selon l'une quelconque des revendications 1 à 10.
